# EUROPÄISCHE PATENTANMELDUNG

(11) **EP 1 873 437 A2**
(43) Veröffentlichungstag der Anmeldung: **02.01.2008**
(21) Anmeldenummer: 07010738.8
(22) Anmeldetag: 31.05.2007
(51) Int. Cl.: F16L 23/032, F16L 23/16, F16L 21/08

(54) **Kältemittelleitung, insbesondere für mit CO2 betriebene Kraftfahrzeugklimaanlagen**

(30) Priorität: 28.06.2006 DE 102006029645
(71) Anmelder: Hansa Automotive GmbH & Co. KG, 70567 Stuttgart (DE)
(72) Erfinder: Bohn, Dagmar, 72770 Reutlingen (DE); Czeslaw, Zolich, 71229 Leonberg (DE); Schmid, Jürgen, 70794 Filderstadt (DE)
(74) Vertreter: Ostertag, Ulrich

(57) **Zusammenfassung**

Es wird eine Kältemittelleitung, insbesondere für mit CO₂ betriebene Kraftfahrzeugklimaanlagen, mit einer Verbindungsanordnung (10) beschrieben. Die Verbindungsanordnung (10) weist ein dicht mit einem ersten Leitungsendstück (14) verbindbares erstes Kupplungsstück (16) und ein dicht mit einem zweiten Leitungsendstück (12) verbindbares zweites Kupplungsstück (18) auf. Die beiden Kupplungsstücke (16, 18) sind durch Befestigungsmittel (48) derart zusammengefügt, dass die Leitungsendstücke (12, 14) über je eine die Kältemittel führende Bohrung (20, 22) in einem der beiden Kupplungsstücke (14, 16) miteinander verbunden sind. Die Kupplungsstücke (16, 18) weisen jeweils auf der zum anderen Kupplungsstück (16,18) weisenden Seite eine Dichtfläche (32, 40) auf. Zwischen den Dichtflächen (32, 40) ist ein Dichtring (42) angeordnet. Das erste Kupplungsstück (16) weist einen wenigstens an seinem freien Endbereich (28) konischen Kupplungszapfen (24) auf, durch den die entsprechende Bohrung (20) führt. Das zweite Kupplungsstück (18) weist eine dem Kupplungszapfen (24) entsprechende konische Zapfenaufnahme (34) auf, in die die entsprechende Bohrung (22) führt. Zwischen der konischen Außenmantelfläche des Kupplungszapfens (24) und der konischen Innenmantelfläche der Zapfenaufnahme (34) ist der Dichtring (42) angeordnet, der die Form eines im Wesentlichen konischen Toroids hat.

## Beschreibung

Die Erfindung betrifft eine Kältemittelleitung, insbesondere für mit CO₂ betriebene Kraftfahrzeugklimaanlagen, mit einer Verbindungsanordnung, welche ein dicht mit einem ersten Leitungsendstück verbindbares erstes Kupplungsstück und ein dicht mit einem zweiten Leitungsendstück verbindbares zweites Kupplungsstück aufweist, wobei beide Kupplungsstücke durch Befestigungsmittel derart zusammengefügt sind, dass die Leitungsendstücke über je eine Kältemittel führende Bohrung in einem der beiden Kupplungsstücke miteinander verbunden sind, und wobei die Kupplungsstücke jeweils auf der zum anderen Kupplungsstück weisenden Seite eine Dichtfläche aufweisen und zwischen den Dichtflächen ein Dichtring angeordnet ist.

Derartige bekannte Kältemittelleitungen bestehen aus einer Mehrzahl von Leitungsteilen, die beispielsweise im Motorraum eines Kraftfahrzeugs verlegt und nach der Verlegung über Verbindungsanordnungen miteinander verbunden werden. Insbesondere bei CO₂ betriebenen Kraftfahrzeugklimaanlagen werden bei erhöhtem Druck und erhöhter Temperatur hohe Anforderungen an die Dichtigkeit und Zuverlässigkeit solcher Verbindungsanordnungen gestellt. Außerdem liegen gerade hier oft beengte Raumverhältnisse vor, bei denen sich große und/oder komplexe Verbindungsanordnungen schwer zusammenbauen lassen. Insbesondere bei Wartungs- oder Reparaturarbeiten müssen die Verbindungsanordnungen wieder getrennt und erneut montiert werden.

Aus der EP 1 445 529 A1 ist eine Kältemittelleitung der eingangs genannten Art bekannt. Bei dieser verlaufen die mit dem Dichtring zusammenwirkenden Flächen der Kupplungsstücke radial. Der Dichtring ist bevorzugt ein metallischer Flachring mit umlaufender Sicke. Um die erforderliche Dichtheit zu erreichen, muss der Flachring mit großer Kraft zusammengepresst werden. Damit der Dichtring noch vor dem Zusammenfügen der Kupplungsstücke zwischen den Dichtflächen befestigt werden kann, ist eine zusätzliche Kunststoffkappe erforderlich, in die der Dichtring eingelegt wird. Die Kunststoffkappe muß auf einen entsprechenden nach außen gerichteten Vorsprung aufgeklipst werden, welcher die Dichtfläche eines der Kupplungsstücke im äußeren Bereich radial umläuft. Die beiden Kupplungsstücke sind über eine einzige Schraube miteinander verschraubt. Die Schraube ist seitlich versetzt zu den Kältemittel führenden Bohrungen der Kupplungsstücke angeordnet. Um beim Verschrauben ein gleichmäßiges Zusammenpressen des Dichtrings zwischen den entsprechenden Flächen zu erreichen und eine Beschädigung des Dichtrings durch etwaiges Verkanten diese Flächen zueinander zu verhindern, ist hier ein nicht komprimierbarer Formkörper als Abstandhalter erforderlich.

Aus der DE 102 61 887 A1 ist eine Rohrkupplung für die lösbare Kupplung von Rohrleitungsabschnitten eines Hochdruck-Rohrleitungssystems bekannt. Hier werden zwei Kupplungsblöcke durch eine einzige Spannschraube zusammengehalten. Einer der Kupplungsblöcke trägt einen Kupplungszapfen, in dem anderen ist eine entsprechende Zapfenaufnahme vorgesehen. Ein plastisch verformbarer Dichtring ist zwischen der Stirnseite des Kupplungszapfens und einer bodenseitigen Fläche des Zapfenaufnahme eingeschlossen. Um den Dichtring für die Montage oder beim Öffnen und Schließen der Kupplung gegen Abfallen, Beschädigung und Verschmutzung zu schützen, ist eine zusätzliche verhältnismäßig aufwändige Schutzhülse erforderlich, in der der Dichtring auf dem Kupplungszapfen vormontiert ist. Auch hier führt eine ungleichmäßige Belastung des Dichtrings beim Montieren der Kupplung zur Beschädigung des Dichtrings. Um eine gleichmäßige Belastung des Dichtrings zu erzielen, wird ein Paar von Stützflächen benötigt, die mit dem Dichtring ein Stützdreieck bilden.

Die Verwendung eines Dichtungs-Toroids für eine kegelige Dichtfläche eines Befüllventils für die Hochdrucktechnik, insbesondere für Druckbehälter von einer beispielsweise mit CO₂ betreibbaren Kältemaschine, ist in der EP 1 197 691 B1 beschrieben. Um die erforderliche Dichtheit zu erzielen, weisen das Dichtungs-Toroid eine komplizierte etwa R-förmige Querschnitts-Kontur und der Ventilsitz eine entsprechende Aufnahme auf.

Aufgabe der vorliegenden Erfindung ist es, eine Kältemittelleitung der eingangs genannten Art so zu gestalten, dass deren Verbindungsanordnung einfach auch unter beengten Raumverhältnissen zusammengefügt werden kann. Mit einfachen Mitteln soll die Verbindungsanordnung auch nach mehrmaliger Montage und Demontage dicht sein und zuverlässig auch erhöhtem Druck (Hoch- oder Niederdruck) und hohen Temperaturen standhalten. Bevorzugt soll die Verbindungsanordnung beständig sein gegenüber unter- und überkritischem CO₂.

Diese Aufgabe wird erfindungsgemäß dadurch gelöst, dass das erste Kupplungsstück einen wenigstens an seinem freien Endbereich konischen Kupplungszapfen aufweist, durch den die entsprechende Bohrung führt, und das zweite Kupplungsstück eine dem Kupplungszapfen entsprechende konische Zapfenaufnahme aufweist, in die die entsprechende Bohrung führt, und zwischen der konischen Außenmantelfläche des Kupplungszapfens und der konischen Innenmantelfläche der Zapfenaufnahme der Dichtring angeordnet ist, der die Form eines im Wesentlichen konischen Toroids hat.

Erfindungsgemäß ist also eine konische Dichtungsanordnung vorgesehen mit einem ebenfalls konischen Dichtring. In der konischen Zapfenaufnahme wird der konische Kupplungszapfen beim Verbinden der Kupplungsstücke sicher geführt. Die Verbindungsanordnung wirkt hierbei wegen der konischen Form selbstzentrierend, so dass die Gefahr einer Verkantung der Kupplungsstücke reduziert und eine Schädigung des Dichtrings nahezu ausgeschlossen ist. Dies erleichtert die Montage auch bei beengten Raumverhältnissen deutlich, wo die Verbindungsanordnung oft nur schwer zugänglich ist und es schwierig ist, die Kupplungsstücke beim Zusammenfügen aufeinander einzurichten. Durch seine konische Form liegt der Dichtring umfänglich gleichmäßig an den entsprechenden Flächen der Kupplungsstücke an, wodurch eine hohe Verpresskraft und damit Druckbeständigkeit ermöglicht wird. Die speziell angepaßten konischen Formen des Kupplungszapfens, der Zapfenaufnahme und des Dichtrings ermöglichen eine optimale Ausfüllung des Dichtspaltes zwischen den Kupplungsstücken, wobei der Dichtring selbst gleichmäßig belastet wird und häufiger wiederverwendbar ist als dies bei bekannten Kupplungen der Fall ist. Außerdem kann die spezielle Dichtungsanordnung mit dem gleichen Dichtring sowohl hochdruckseitig als auch niederdruckseitig verwendet werden.

Bei einer besonders vorteilhaften Ausführungsform können die konische Außenmantelfläche des Kupplungszapfens, die konische Innenmantelfläche der Zapfenaufnahme und die Außenmantelfläche und die Innenmantelfläche des Dichtrings parallel zueinander verlaufen. Auf diese Weise ist der Verpressdruck auf den Dichtring über dessen gesamte Dichtflächen gleichmäßig. Dies schont den Dichtring. Ferner wird die Dichtheit der Verbindung beim Einsatz des gleichen Dichtrings sowohl hoch- als auch niederdruckseitig deutlich erhöht. Außerdem wird durch die Parallelität der konischen Dichtflächen die Selbstzentrierung beim Zusammenbau verbessert.

Der Kupplungszapfen kann einen zylindrischen Bereich haben, an den sich zapfenaufnahmeseitig insbesondere mit einem stufenförmigen Übergang der konische Bereich anschließt. Der zylindrische Bereich führt beim Zusammenbau den Kupplungszapfen und verhindert insbesondere bei einer einseitigen Verschraubung der Kupplungsstücke eine Verkippung, sobald er in einen entsprechenden Bereich der Zapfenaufnahme eingetaucht ist. An dem stufenförmigen Übergang kann der Dichtring beim Einführen des Kupplungszapfens anliegen und mit einer optimalen Kraftübertragung in Richtung der Zapfenaufnahme gepresst werden.

Um den Dichtring für die Montage oder beim Öffnen und Schließen der Verbindungsanordnung gegen Abfallen zu schützen, können der Kupplungszapfen eine umlaufende Zapfennut und der Dichtring mindestens nach der Montage einen entsprechenden Kragen aufweisen. Der Dichtring wird zum Fixieren auf dem Kupplungszapfen mit seinem Kragen in die Zapfennut unverlierbar eingefügt, insbesondere eingeklipst. Von großem Vorteil ist, dass keine zusätzliche Schutzhülse oder Kunststoffkappe benötigt wird, wie dies bei bekannten Verbindungsanordnungen erforderlich ist.

Zweckmäßigerweise kann bei Verwendung eines Kupplungszapfens mit einem zylindrischen Bereich die Zapfennut zwischen dem zylindrischen Bereich und dem konischen Bereich des Kupplungszapfens angeordnet sein. Auf diese Weise läßt sich ein Dichtring mit einer einfachen Form realisieren.

Bei einer weiteren vorteilhaften Ausführungsform kann der Dichtring aus einem CO₂-beständigen Kunststoff, insbesondere einem PTFE-artigen Kunststoff, sein. Kunststoff ist verformbar und passt sich optimal der Form des Dichtspaltes an. Im Unterschied zu bekannten Metalldichtungen können Kunststoffdichtungen nach dem Lösen der Verbindung ihre ursprüngliche Form wieder annehmen und sind so mehrfach wiederverwendbar. PTFE (Polytetrafluorethylen)-artige Kunststoffe sind ferner chemikalien- und temperaturbeständig und unbrennbar. Außerdem zeichnen sie sich durch geringe Haftfähigkeit und sehr gute Gleiteigenschaften aus, was die Montage erleichtert.

Als Befestigungsmittel kann eine einzige, seitlich gegen die Kältemittel führenden Bohrungen der Kupplungsstücke versetzt angeordnete Schraube vorgesehen sein. Die Verbindungsanordnung kann so auch bei beengten Raumverhältnissen einfach auch einhändig montiert werden.

Ein Ausführungsbeispiel der Erfindung wird nachfolgend anhand der Zeichnung näher erläutert; es zeigen
- Figur 1: schematisch im Axialschnitt eine Kältemittelleitung mit einer Rohrkupplung;
- Figur 2: schematisch eine Explosionszeichnung der Kältemittelleitung aus Figur 1;
- Figur 3: schematisch einen Dichtring der Rohrkupplung aus den Figuren 1 und 2 im Axialschnitt.

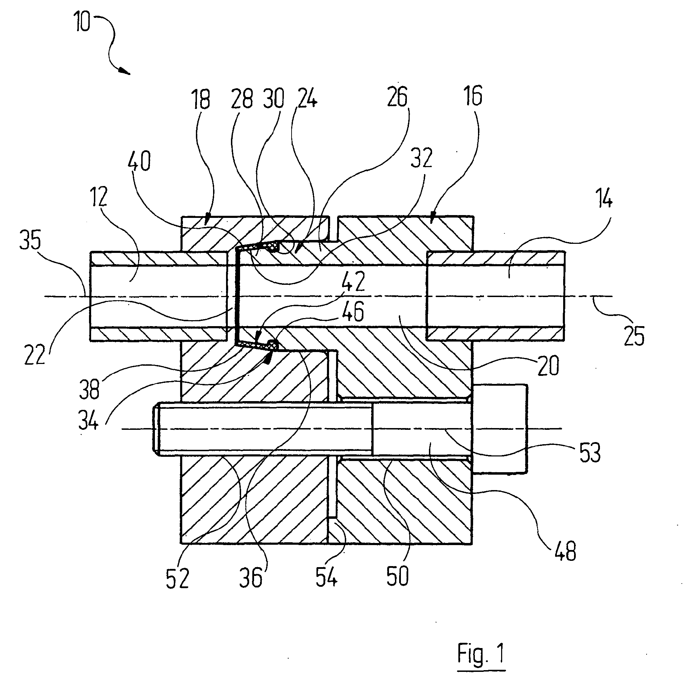

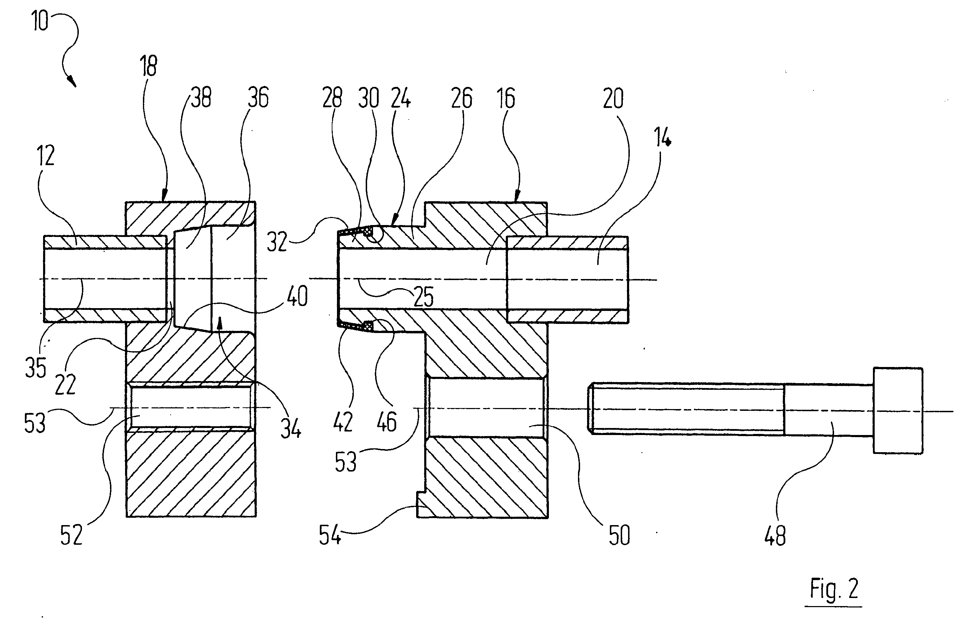

In den Figuren 1 und 2 ist eine insgesamt mit dem Bezugszeichen 10 versehene Rohrkupplung dargestellt. Die Rohrkupplung 10 verbindet zwei rohrförmige Leitungsendstücke 12 und 14 zweier Leitungsteile einer ansonsten nicht gezeigten Kältemittelleitung für eine mit CO₂ betriebene Kraftfahrzeugklimaanlage miteinander.

Die Rohrkupplung 10 weist ein dicht mit dem ersten Leitungsendstück 14 verbundenes erstes Kupplungsstück 16, in Figuren 1 und 2 rechts, und ein dicht mit dem zweiten Leitungsendstück 12 verbundenes zweites Kupplungsstück 18, in Figuren 1 und 2 links, auf. Die Kupplungsstücke 16 und 18 sind etwa quaderförmig. Sie weisen jeweils eine Bohrung 20 beziehungsweise 22 auf, in die das jeweilige Leitungsendstück 14 beziehungsweise 12 eingefügt ist. Die Bohrungen 20 und 22 haben gleichzeitig die Funktion eines Verbindungskanals.

Das erste Kupplungsstück 16 weist einen Kupplungszapfen 24 mit rundem Querschnitt auf, in dem koaxial zu seiner Längsachse 25 die Bohrung 20 verläuft. Der Kupplungszapfen 24 hat an der Seite, mit der er an den Grundkörper des ersten Kupplungsstücks 16 angrenzt, einen zylindrischen Bereich 26. An den zylindrischen Bereich 26 schließt sich ein konisch zulaufender Bereich 28 an, der sich bis zur freien Stirnseite des Kupplungszapfens 24 erstreckt.

Zwischen dem zylindrischen Bereich 26 und dem konischen Bereich 28 befindet sich ein stufenförmiger Übergang mit einer umlaufenden Zapfennut 30. Der Durchmesser des zylindrischen Bereichs 26 ist in Nachbarschaft der Zapfennut 30 größer als der Durchmesser des konischen Bereichs 28.

Das zweite Kupplungsstück 18 weist eine dem Kupplungszapfen 24 entsprechende Zapfenaufnahme 34 mit rundem Querschnitt auf, in der koaxial zu ihrer Längsachse 35 die Bohrung 22 verläuft. Die Zapfenaufnahme 34 hat auf ihrer offenen Seite, welche dem Kupplungsstück 16 zugewandt ist, einen zylindrischen Aufnahmebereich 36. In dem zylindrischen Aufnahmebereich 36 wird der zylindrische Bereich 26 des Kupplungszapfens 24 beim Zusammenfügen der Kupplungsstücke 16 und 18 geführt. Die Zapfenaufnahme 34 läuft zu ihrem Boden hin in einem konischen Aufnahmebereich 38 konisch zu. Die Neigung der Mantellinien des konischen Aufnahmebereichs 38 zu ihrer Längsachse 35 entspricht der Neigung der Mantellinien des konischen Bereichs 28 zur Längsachse 25 des Kupplungszapfens 24, so dass die entsprechenden Konusflächen bei montierter Rohrkupplung 10 parallel zueinander verlaufen. Der Innendurchmesser des konischen Aufnahmebereichs 38 ist etwas größer als der Außendurchmesser des konischen Bereichs 28 des Kupplungszapfens 24.

Bei montierter Rohrkupplung 10 (Figur 1) liegt der zylindrische Bereich 26 des Kupplungszapfens 24 an der Innenmantelfläche des zylindrischen Aufnahmebereichs 36 der Zapfenaufnahme 34 an. Zwischen der Innendichtfläche 40 und der Außendichtfläche 32 verbleibt ein Dichtspalt.

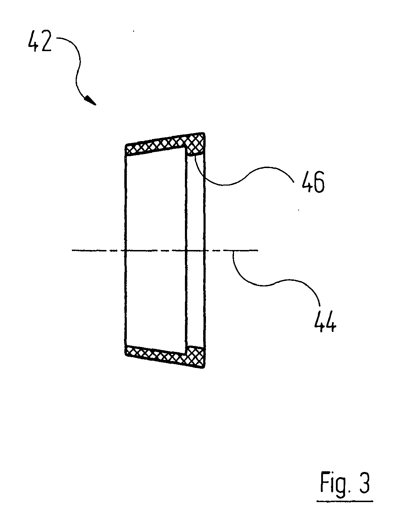

Im Dichtspalt ist ein Dichtring 42 aus Polytetrafluorethylen (PTFE) angeordnet, welcher in Figur 3 im Detail gezeigt ist. Der Dichtring 42 hat die Form eines im Wesentlichen konischen Toroids. Das Toroid entsteht durch Rotation einer L-förmigen Fläche um eine Rotationsachse 44, welche bei montiertem Dichtring 42 koaxial zur Längsachse 25 des Kupplungszapfens 24 verläuft. Der kurze Arm des L erstreckt sich senkrecht zur Rotationsachse 44 und zeigt zu dieser hin. Der lange Arm des L ist mit seinem freien Ende zur Rotationsachse 44 hin geneigt. Die Neigung des langen Arms zur Rotationsachse 44 entspricht der Neigung der Mantellinien des konischen Bereichs 28 des Kupplungszapfens 24 beziehungsweise der Zapfenaufnahme 34 zu der Längsachse 25 beziehungsweise 35. Der kurze Arm des L erzeugt somit die offene Stirnseite des Dichtrings 42 mit dem großen Durchmesser und bildet dort einen nach innen ragenden Kragen 46.

Die Außenmaße des Kragens 46 entsprechen den Innenmaßen der umlaufenden Zapfennut 30 am Kupplungszapfen 24, so dass der Dichtring 42 zum Fixieren auf dem Kupplungszapfen 24 mit seinem Kragen 46 in die Zapfennut 30 unverlierbar eingefügt, beispielsweise eingeklipst, werden kann. Auf diese Weise kann der Dichtring 42 für die Montage oder beim Öffnen und Schließen der Rohrkupplung 10 gegen Abfallen geschützt werden. Außerdem liegt der eingeklipste Kragen 46 an dem stufenförmigen Übergang zum zylindrischen Bereich 26 an. So wird er beim Einführen des Kupplungszapfens 24 in die Zapfenaufnahme 34 von dieser Seite blockiert und über den Kupplungszapfen 24 kann eine optimale Krafteinwirkung auf den Dichtring 42 realisiert werden.

Die durch den langen Arm des L gebildete Außenmantelfläche und die Innenmantelfläche des Dichtrings 42 verlaufen parallel zueinander. In montiertem Zustand der Rohrkupplung 10 verlaufen sie parallel zur Fläche 32 des Kupplungszapfens 24 und zur Fläche 40 der Zapfenaufnahme 34 und liegen dort flächig an.

Die Kupplungsstücke 16 und 18 sind durch eine einzige Schraube 48 miteinander verschraubt. Die beiden Kupplungsstücke 16, 18 weisen zur Aufnahme der Schraube 48 jeweils eine durchgängige Schraubenbohrung 50, 52 auf, welche seitlich gegen die Bohrungen 20, 22 versetzt angeordnet sind. Die Achsen 53 der Schraubenbohrungen 50, 52 verlaufen parallel zu den Längsachsen 25, 35 des Kupplungszapfens 24 beziehungsweise der Zapfenaufnahme 34. Die Schraubenbohrung 52 des zweiten Kupplungsstücks 18 weist ein Innengewinde auf. Durch Verschrauben der Schraube 48 mit einem bestimmten Drehmoment wird der Kupplungszapfen 24 so in die Zapfenaufnahme 34 gedrückt, dass der Dichtring 42 eine bestimmte, zur Abdichtung notwendige Pressung erhält.

Das erste Kupplungsstück 16 weist außerdem auf seiner dem ersten Kupplungsstück 16 zugewandten Stirnfläche eine Erhöhung 54 auf, welche sich auf der der Bohrung 20 gegenüberliegenden Seite der Schraubenbohrung 50 befindet. Die Erhöhung 54 erhöht die Krafteinwirkung beim Zusammenschrauben durch die exzentrische Krafteinwirkung. Die Elemente sind so abgestimmt, dass eine Verkantung beim Zusammenbau nicht möglich ist.

Beim Einführen des Kupplungszapfens 24 in die Zapfenaufnahme 34 bewirkt die konische Form der Flächen 32, 40 und des Dichtrings 42, dass der Kupplungszapfen 24 in der Zapfenaufnahme 34 automatisch zentriert wird, ohne dass die Flächen 32, 40 zueinander verkantet werden. Auf diese Weise wird trotz der seitlichen Verschraubung eine optimale, gleichmäßige Dichtwirkung mit einer hohen Verpresskraft erzielt, wobei der Dichtring 42 gleichmäßig belastet wird. Die Rohrkupplung 10 kann daher deutlich häufiger geöffnet und wieder verschlossen werden als dies bei bekannten Rohrkupplungen möglich ist.

Bei dem oben beschriebenen Ausführungsbeispiel der Rohrkupplung 10 sind unter anderem folgende Modifikationen möglich:
Die Erfindung ist nicht beschränkt auf die Verwendung bei mit CO₂ betriebenen Kraftfahrzeugklimaanlagen. Vielmehr kann sie auch bei Leitungen für andersartige Kältemittel verwendet werden. Sie kann auch bei stationären Kälteanlagen beispielsweise im industriellen Bereich verwendet werden..

Die Rohrkupplung 10 kann statt für rohrförmige Kältemittelleitungen beispielsweise auch als Verbindungsanordnung für flexible Leitungen ausgebildet sein.

Die Rohrkupplung 10 kann auch als Verbindungsstelle zwischen anderen Kreislaufkomponenten ausgebildet sein, die nicht anschließend an die Bohrungen 22 beziehungsweise 20 rohrförmig oder flexibel weggehen. Die Rohrkupplung 10 ist auch nicht beschränkt auf die Verwendung in Kältemittelleitungen.

Der Kupplungszapfen 24 und die Zapfenaufnahme 34 können auch durchgängig konisch sein.

Der Dichtring 42 kann statt aus PTFE auch aus einem anderen CO₂-beständigen Kunststoff sein, insbesondere aus einem Elastomer-Dichtungswerkstoff auf Basis von Fluor-Polymeren.

Anstelle der Schraube 48 kann auch ein andersartiges Befestigungsmittel, beispielsweise eine Klammer oder ein Schraubverschluss, vorgesehen sein. Es kann auch eine Vielzahl von Schrauben oder Kombi-Schrauben verwendet werden.

## Patentansprüche

1. Kältemittelleitung, insbesondere für mit CO₂ betriebene Kraftfahrzeugklimaanlagen, mit einer Verbindungsanordnung, welche ein dicht mit einem ersten Leitungsendstück verbindbares erstes Kupplungsstück und ein dicht mit einem zweiten Leitungsendstück verbindbares zweites Kupplungsstück aufweist, wobei beide Kupplungsstücke durch Befestigungsmittel derart zusammengefügt sind, dass die Leitungsendstücke über je eine Kältemittel führende Bohrung in einem der beiden Kupplungsstücke miteinander verbunden sind, und wobei die Kupplungsstücke jeweils auf der zum anderen Kupplungsstück weisenden Seite eine Dichtfläche aufweisen und zwischen den Dichtflächen ein Dichtring angeordnet ist,
**dadurch gekennzeichnet, dass**
das erste Kupplungsstück (16) einen wenigstens an seinem freien Endbereich (28) konischen Kupplungszapfen (24) aufweist, durch den die entsprechende Bohrung (20) führt, und das zweite Kupplungsstück (18) eine dem Kupplungszapfen (24) entsprechende konische Zapfenaufnahme (34) aufweist, in die die entsprechende Bohrung (22) führt, und zwischen der konischen Außenmantelfläche des Kupplungszapfens (24) und der konischen Innenmantelfläche der Zapfenaufnahme (34) der Dichtring (42) angeordnet ist, der die Form eines im Wesentlichen konischen Toroids hat.

2. Kältemittelleitung nach Anspruch 1, **dadurch gekennzeichnet, dass** die konische Außenmantelfläche (32) des Kupplungszapfens (24), die konische Innenmantelfläche (40) der Zapfenaufnahme (34), und die Außenmantelfläche und die Innenmantelfläche des Dichtrings (42) parallel zueinander verlaufen.

3. Kältemittelleitung nach Anspruch 1 oder 2, **dadurch gekennzeichnet, dass** der Kupplungszapfen (24) einen zylindrischen Bereich (26) hat, an den sich zapfenaufnahmeseitig insbesondere mit einem stufenförmigen Übergang (30) der konische Bereich (28) anschließt.

4. Kältemittelleitung nach einem der vorherigen Ansprüche, **dadurch gekennzeichnet, dass** der Kupplungszapfen (24) eine umlaufende Zapfennut (30) und der Dichtring (42) mindestens nach der Montage einen entsprechenden Kragen (46) aufweist.

5. Kältemittelleitung nach Anspruch 3 und 4, **dadurch gekennzeichnet, dass** die Zapfennut (30) zwischen dem zylindrischen Bereich (26) und dem konischen Bereich (28) des Kupplungszapfens (24) angeordnet ist.

6. Kältemittelleitung nach einem der vorherigen Ansprüche, **dadurch gekennzeichnet, dass** der Dichtring (42) aus einem CO₂-beständigen Kunststoff, insbesondere einem PTFE-artigen Kunststoff, ist.

7. Kältemittelleitung nach einem der vorherigen Ansprüche, **dadurch gekennzeichnet, dass** als Befestigungsmittel nur eine einzige, seitlich gegen die Kältemittel führenden Bohrungen (20, 22) versetzt angeordnete Schraube (48) vorgesehen ist.
